# EUROPEAN PATENT SPECIFICATION

(11) **EP 2 233 425 B1**
(45) Date of publication and mention of the grant of the patent: **13.06.2012**
(21) Application number: 10157006.7
(22) Date of filing: 19.03.2010
(51) Int. Cl.: B60P 1/16, B66F 9/19, B60P 1/28, B65G 65/23, B66F 9/12, B65G 67/34

(54) **System for unloading a container from a wagon.**
System zum abladen eines Behälters von einem Waggon.
Système pour décharger un conteneur d'un wagon.

(30) Priority: 24.03.2009 FI 20095304; 30.09.2009 FI 20096002
(43) Date of publication of application: 29.09.2010
(73) Proprietor: Lahtinen, Pertti, 40100 Jyväskylä (FI)
(72) Inventor: Lahtinen, Pertti, 40100 Jyväskylä (FI)
(74) Representative: Helke, Kimmo Kalervo

(56) References cited:
- DE-A1- 1 909 542
- DE-U1-202007 003 582
- GB-A- 2 135 962
- JP-A- 58 020 574
- US-A- 3 199 697
- US-A- 4 838 752
- US-A1- 2007 065 265

## Description

The invention relates to a system for unloading separate dumpable containers from a wagon, particularly a railway wagon, wherein the support surface of the wagon is adapted to carry each container in the transport stage, and the system includes means for dumping the container in the unloading stage for draining the material out of the container.

US publication 5,685,454 discloses a dumping system for a sack container supported on a frame. Here the bottom of the frame is tilted while simultaneously tipping down the mouth located in the bottom part of the sack so that the material is drained out from the opening in the sack. US publication 6,835,041 B1 proposes a system in which containers are dumped with a specific auxiliary device so that the material flows out from a lateral hatch. In addition, a multitude of devices are known by which a container can be inverted, such as those described in US publications 5,558,485 and 6,394,736.

A multitude of cargo wagons equipped with a dumpable platform are additionally known, such as US publication 6,192,804. In these, the cargo either flows too near to the rail or an additional guide takes it so far down that a specific solution with a silo submerged in the ground is required.

Publications EP 1690809 and EP 1690810 (Innofreight) propose a transportation system using a separate container wherein unloading of the container takes place by inverting the container. Such a system requires a particularly heavy machine at the unloading site.

Publication WO 93/17951 proposes an unloading device with which a separate container to be dumped is tilted for unloading the cargo. The unloading device lifts the dumpable container off the ground after which dumping is performed by tilting the container. The device can also be used for transporting containers from one place to another. Such an unloading device also requires a heavy machine. A similar unloading device is disclosed in publication US 2007/0065265.

Publication DE 202007003582 U1 proposes an unloading device with the help of which a special container equipped with a tilting axis can be unloaded.

The object of this invention is to provide a logistic system that is simpler than before and easily adaptable to railway wagons or wheeled wagons. With dumping, it is not desired to lose any lifting height or drain the material to the rail or the corresponding wheel line.

This object is achieved by the provision of a system according to the technical features in combination of claim 1. Said system being further defined in dependent claim 2.

The means defined in claim 1 include lifting equipment leaning on the support surface of the wagon for tilting the container and locking means for keeping the container connected to the lifting equipment.

The machine can be quite light because great forces are not acting on it during handling of the container.

According to an advantageous embodiment not pertaining to the invention, the system uses a separate unloading device which can be taken under the container in the same way as the forks of a lift truck, and this can be used to move the container slightly sideward before dumping the material out of the container.

According to an embodiment not pertaining to the invention, the unloading device includes a dump frame adapted to be tilted leaning on a frame which is further adapted to be supported to a support surface during dumping of the container. The unloading device further includes an intermediate arm articulated at its ends between the front end of the frame and the front end of the dump frame as well as an actuator adapted to move the dump frame outwards for a distance S by turning the intermediate arm.

According to an advantageous embodiment not pertaining to the invention, the dump actuator of the unloading device is articulated, at its one end, to the frame, and at the other end, to the end of the dump frame opposing the joint, to provide a rotating moment as high as possible.

According to an embodiment not pertaining to the invention, the dump actuator is a telescopic cylinder.

According to an embodiment not pertaining to the invention, the length of the intermediate arm is in the range of 30 - 120 cm and the length of the intermediate arm is 10 - 20% of the length of the dump frame.

According to an embodiment not pertaining to the invention, the dump frame is adapted to tilt at least to an angle of 30° relative to the frame when tilting the dump frame.

Advantageously, according to an embodiment not pertaining to the invention, the unloading device is equipped with a quick-connection system and it is used with a conventional machine, such as a wheel loader.

As an advantage of the system according to the invention can be considered the fact that heavy loads can be handled with quite light machines, leaning on the support surface of the wagon. Loading of the machine is virtually inexistent. Even a light machine functions as a sufficient counterforce; that is, the machine is light relative to the weight of the load. In the system, it is thus possible to match together containers, goods wagons and the unloading device.

The invention is described below by making reference to the enclosed figures, in which
- Figure 1: shows the unloading device in the rest position on top of a railway wagon,
- Figure 2: is an axonometric view of the unloading device in the rest position,
- Figure 3: shows the unloading device in use while tilting the container,
- Figure 4: is an axonometric view depicting separately the unloading device of Figure 3,
- Figure 5: is a cross-sectional view of a container and a hatch articulation,
- Figures 6a - 6c: show the construction of a transport pallet,
- Figures 7a - 7d: illustrate the operation of a locking mecha- nism for a container.

The reference numbers in the Figures refer to the following:
- 10: unloading device
- 12: support fork arms
- 14: unloading device frame
- 16: quick-connection detent
- 18: container lock
- 19: pushing cylinder
- 20: dumping cylinder
- 21: bottom joint (auxiliary cylinder)
- 22: lifting fork (frame)
- 23: actuator
- 24: dump frame
- 25: intermediate arm
- 26: bottom joint (intermediate arm)
- 27: top joint (auxiliary cylinder + intermediate arm)
- 28: lifting fork
- 29: bottom joint (dumping cylinder)
- 30: railway wagon
- 31: top joint (dumping cylinder)
- 32: support surface in the wagon
- 34: machine
- 35: fork space
- 36: cargo space (container / interchangeable platform)
- 37: hatch
- 38: latch
- 39: latch shaft
- 40: latch control arm
- 41: connecting rod
- 44: top joint (locking cylinder)
- 45: bottom joint (locking cylinder)
- 46: locking cylinder
- 48: locking latch (container)
- 50: crank arm
- 52: opening detent
- 54: locking hole
- 56: transport pallet

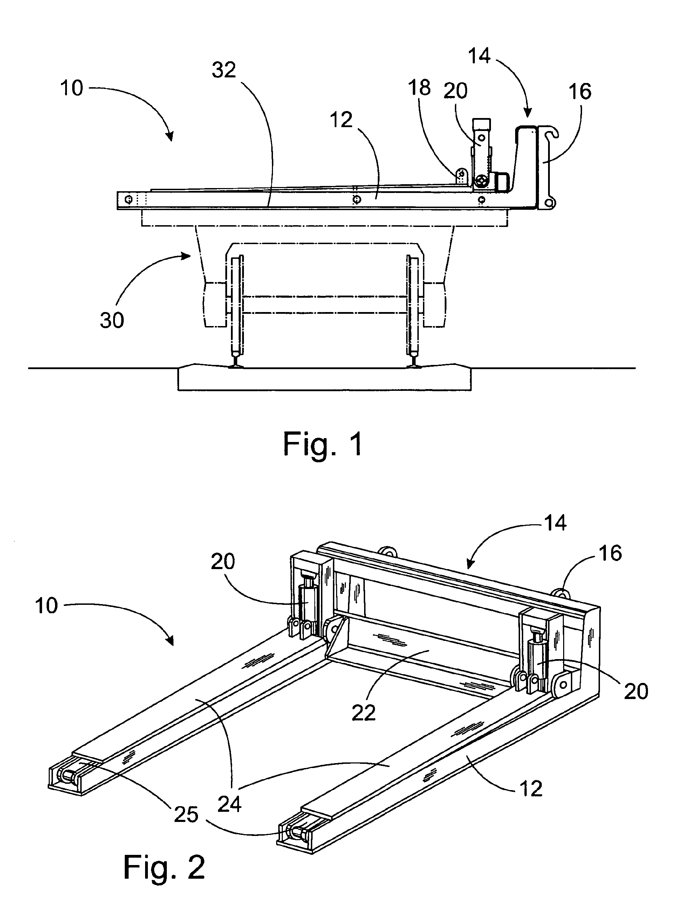

In Figure 1 the railway wagon is referred to by reference number 30 and its support surface for the load by reference number 32. For this invention, the support surface 32 is particularly essential in that a high load can be used with a light device in which case the machine connected to the connection detents 16 need not be large. In this connection, the support surface refers to a surface which has a height difference to the ground. Thus the support surface is different from the ground. The height difference is advantageously such that a smaller transport device, for example, to which the cargo of the container is unloaded, can be brought to the level of the support surface or preferably to a lower level than this, beside the container to be unloaded.

The connection detents 16 comprised in the unloading device are advantageously quick-connection detents. According to Figure 2, the unloading device 10 comprises a frame 14 with fork arms 12, and the frame 14 has said connection detent 16 for the machine. The machine provides hydraulic power in a known manner. In Figure 2, the unloading device 10 is in the rest position resembling thus a fork lift. The dump frame 24, located inside the fork arms 12, is articulated to the frame 14 by means of intermediate arms 25.

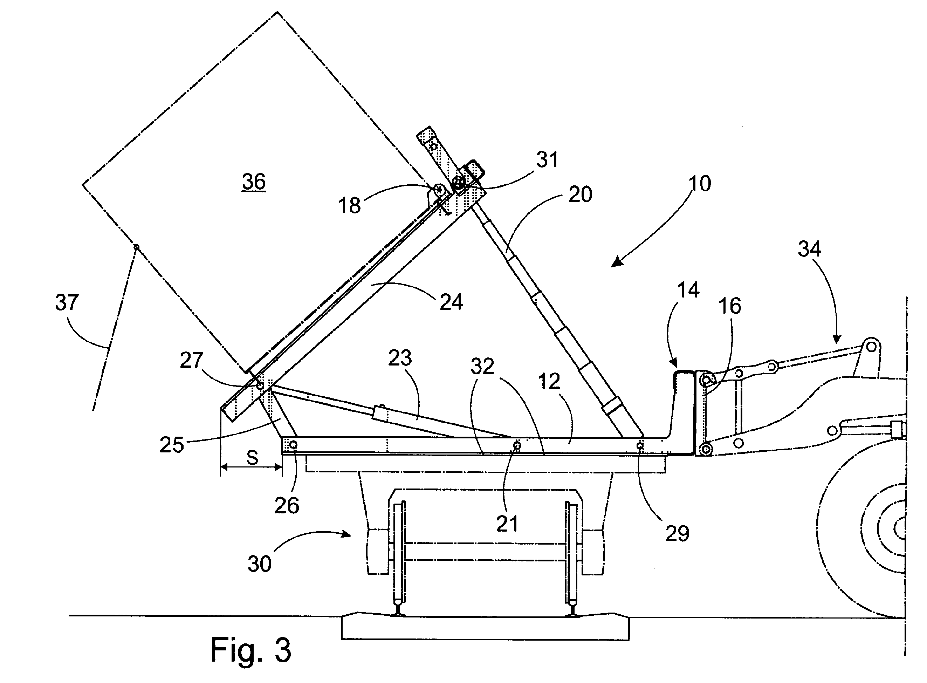

In Figure 3 the unloading device is used in the dumping position wherein the intermediate arm 25 has been extended with an actuator 23. Henceforth the actuator 23 is referred to as auxiliary cylinder 23. Thus the dump frame 24 of the container 36 can be moved slightly forward and upward, and after opening the hatch 37, the material is drained to a distance S from the railway wagon. Here the machine 34 can be a wheel loader or a tractor equipped with a front loader, for example, fitted with quick-connection equipment. The length of the intermediate arm is in the range of 30 - 120 cm and it is advantageously 10 - 20% of the length of the dump frame.

It should be noted that in the initial stage of the lifting event when starting off from the rest position of Figure 1, the lifting cylinder 20 must first lift the dump frame 24 so that the auxiliary cylinder 23 would have some arm of force, after which the arm of force increases when extending out the intermediate arm 25.

The intermediate arm 25 connects the frame 14 by the joint 26 of the front end of the fork arm 12 and by the joint 27 of the front end of the dump frame 24. The top end of the auxiliary cylinder 23 is articulated to the joint 27 as well and its other end is connected to the joint 21 in the fork arm 12 of the frame 14. The joint 31, located at the top end of the dump frame 24, is acted upon by the lifting cylinder 20 and it is articulated to the joint 29 at the frame side end of the fork arm 12. Because the lifting cylinder 20 is articulated to the top end of the dump frame 24, the moment tipping the container 36 is as high as possible. Thus the force required from the lifting cylinder 20 is notably smaller than it would be if the lifting cylinder were articulated to the fork arms 12 at the joint 21. The lifting cylinder 20 is advantageously a telescopic cylinder. The lifting cylinder 20 and the auxiliary cylinder 23 can take their driving power from the machine and they can be hydraulic, for example. The joints 26 and 27 are located essentially at the front end of the frame 12 and the dump frame 24. One or both of these can have a small overhang.

It is essential that the container must be connected to the dump frame in some way. In this case a container lock 18 is used by which the container 36 is kept on top of the dump frame 24 during tilting. The device also includes suitable means for opening the hatch 37.

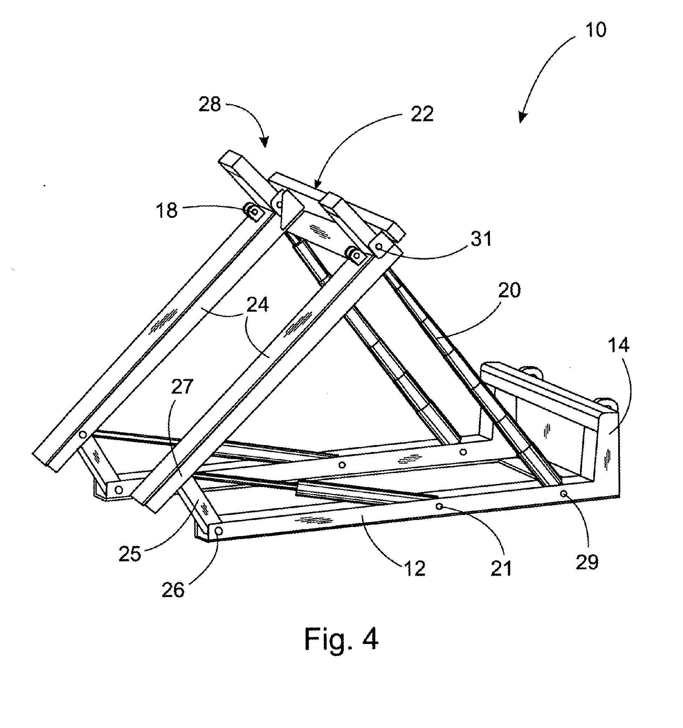

Figure 4 shows clearly the assembly of the unloading device comprising two forks, a frame fork (frame component 14 and fork arms 12) and a lifting fork 28 including a dump frame 24 and a frame component 22 binding these. In Figure 4 the unloading device 10 is in its dumping position wherein the intermediate arms 25 have lifted the dump frame 24 up and forward.

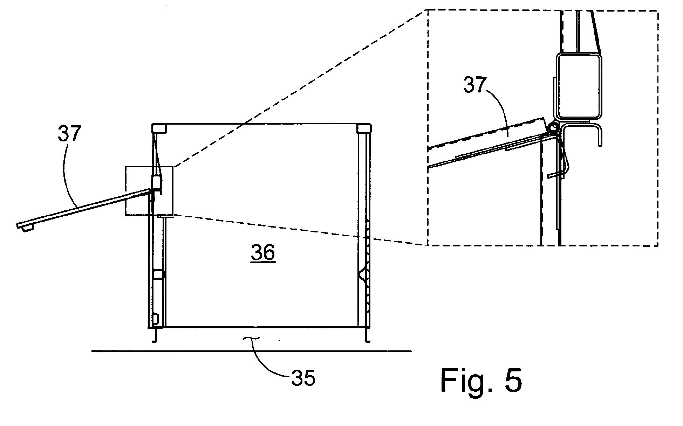

The detailed picture in Figure 5 shows the hinge assembly of a hatch of a possible container. The hinge assembly is advantageously located laterally in the container 36 and the hatch 37 can open sufficiently to allow smooth unloading of the cargo. Figure 5 shows the fork space 35 arranged under the container 36 between the feet of the container to which fork space the fork arms (such as arms 12 and 24) are pushed.

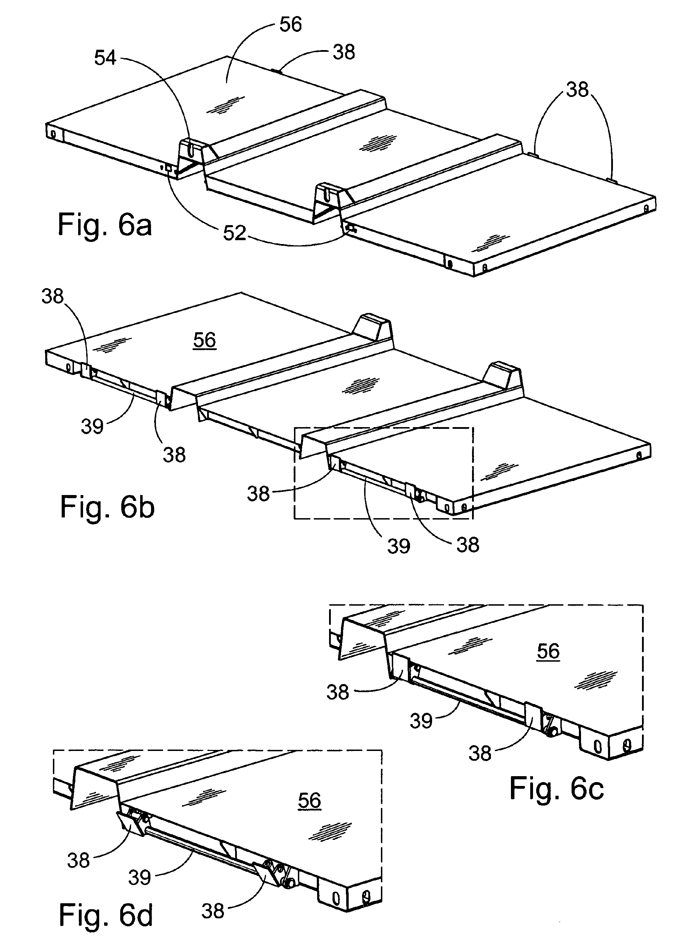

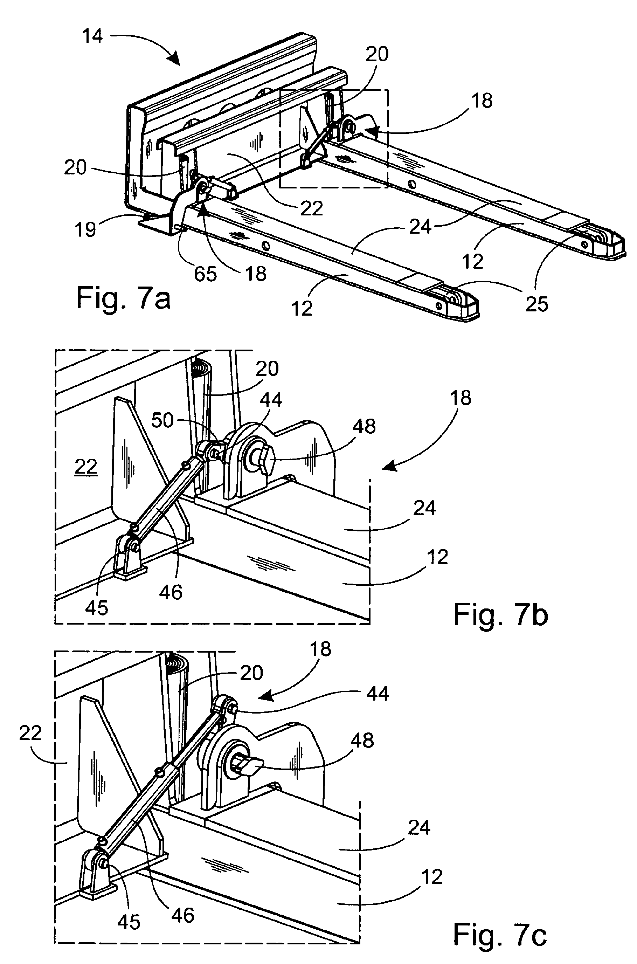

According to an advantageous embodiment, the container 36 to be transported is fastened to a railway wagon 32 by means of a container lock 18. The transport pallet 56 shown in Figures 6a - 6d has locking holes 54 to which the container lock is fastened with locking latches. The operation of the container lock is illustrated in more detail in Figures 7a - 7c. The locking mechanism of the hatch of the container 36 is located inside the transport pallet 56. The locking mechanism of the hatch can be operated from the frame 14 side end of the unloading device by a pushing cylinder 19.

Figures 7a - 7c illustrate the operating mechanism of the container lock 18. In Figure 7b the container lock 18 is in the open position whereupon the locking latch 48 is in the vertical position. The locking latch 48 is operated via a crank arm 50 by a locking cylinder 46 which is articulated, at one end, to the frame 22 with a joint 45 and, at the other end, to the crank arm 50 with a joint 44. According to Figure 7c, when the container lock 18 is used for locking the container 36 to the unloading device 10, the locking latches 48 settle in the locking holes 54 in the transport pallet 56 of Figures 6a - 6d and the locking cylinder 46 pushes the crank arm 50 which turns the locking latch 48 to the horizontal position, i.e. the lock position. Thus the locking latches cannot come out of the locking holes 54 and the container 36 is locked.

According to an advantageous embodiment, the unloading device has a special construction and it dumps to the side of the cargo space utilizing the transport means as the support surface and the mass of the cargo to be dumped as the dumping counterforce. When unloading the cargo, the unloading device lifts and moves the cargo space to the side enabling unloading to the side of railway wagons standing in rails, for example. The unloading device is advantageously installable in existing machines and it can be connected as a quick-connectable accessory.

Accessories or additional features can also be implemented in the unloading device. The unloading device can be made in such a way that it enables unloading to the side of its own. The unloading device can include a connecting device for the cargo space to be used during unloading. More accurate dumping of the cargo space and checking of the emptiness of the cargo space can be performed mechanically. The unloading device can also be equipped with a function that enables transferring a loaded or an empty cargo space from one vehicle to another. In addition, the unloading device can be provided with a mechanical opening or locking system for the unloading hatches for transferring a full cargo space and dumping it to a feed hopper, for example. The unloading device can be fixedly installed in the field, such as in a building, without an electrically operated machine.

In a system according to an advantageous embodiment, the length, width and height of the container used, or more generally of the cargo space, can be in the range of 2000 - 12500 mm, 2400 - 3500 mm and 1200 - 3800 mm respectively. In the cargo space, the unloading hatches are advantageously located along its long side and dumping can be performed by tilting with the unloading device. The cargo space can have so called container locking places. The special construction, dimensioning and shape of the cargo space facilitate its unloading. The dimensioning and construction of the cargo space enable lifting and transferring an empty or a full cargo space normally with existing container transfer equipment or normally with a lift truck using truck arms, or with various machines using our special structured unloading device.

Various accessories can be added to the cargo space. A quick-connectable ceiling or cover for covering the cargo can be installed in the cargo space. The height and volume of the cargo space can be adjusted with quick-connectable additional sides according to the specific weight of the transported mass. Using a centering accessory that takes into account the width of the cargo space, the cargo space can be connected to a railway wagon quickly, securely and easily.

The cargo space can be easily connected to a truck with container locks. The cargo space can have openable center doors on both sides enabling raw wood transportations and, if required, a return transportation of chips or sawdust, for example, as so called delivery and return cargos. The cargo space can additionally include rear doors for unloading piece goods, for example.

In the system, it is possible to use containers matched to each other and equipped with suitable connecting devices, and transport means, such as railway wagons, as well as a specific unloading device located in the unloading area by which the containers to be unloaded can be tilted for unloading the material therefrom. The components of the system are described above in a quite simplified manner. For the system, it is essential that the unloading device can be pushed under the containers during the unloading event so that the support surface of the wagon can be utilized and the rear corner of the container can be lifted leaning thereon for tilting the container. The machine does not need to lift up the entire container so that the machine can be quite light and it is sufficient that it can handle the unloading device in the free state. With the system, it is also possible to distribute the material slightly further away from the wagon, which is a remarkable advantage when unloading great amounts.

The system according to the invention is based on the use of novel cargo spaces, which are described above in more detail, and the unloading device. The advantages of the system compared to currently existing systems are a notably better use of presently available transport equipment by means of several unloading positions, for example. An unloading system according to the invention can be used in existing machines the kind of which are in use more than 10,000 units in Finland, for example. The quick-connecting system of the unloading device enables using the machine for other works as well. Together these enable serving several new users ranging from large industrial or waste burning plants to small thermal power plants, for example.

With the system according to the invention the following advantages are achieved compared to the presently available systems. The system provides a new possibility for the use of combined transport, for example, in the transportation of bio fuel or forest industry products and raw material, due to an easy and economical transfer of the loaded cargo space from one means of transport to another, such as from truck to train. Advantageously, the system enables the use of all transport means, such as railway/marine/trailer truck transportations, and gives a new possibility in longer distances or in transit traffic, for example, for transferring the cargo space of trailer trucks to a train enabling the use of existing container transfer equipment. Due to its economic efficiency, the system enables the use of the space as a storage in pellet burning plants, for example. In addition, the system enables the delivery and return transport more efficiently than before.

## Claims

1. A system for unloading separate dumpable containers (36) from a wagon (30), such as a railway wagon, wherein the containers (36) are supported to the support surface (32) of the wagon (30) in the transport stage, and the system includes
- means for tilting the container (36) in the unloading stage for draining the material out from a lateral hatch (37) included in the container (36), and
- locking means (18) for keeping the container (36) fastened to a dump frame (24) during its tilting,
wherein said means for tilting the container (36) are adapted to be moveable with a machine (34),
**characterized in that** said means are adapted to be pushable under the container (36), and said means further include a frame (14) leaning on the support surface (32) of the wagon (30) and said dump frame (24) articulated thereto for carrying the container (36).

2. A system according to claim 1, **characterized in that** said means for tilting the container (36) include a lifting equipment having an intermediate arm (25) between said dump frame (24) and said frame (14), for moving the dump frame (24) outwards.

## Patentansprüche

1. Zum Entladen kippbarer separater Container (36) aus einem Wagen (30), zum Beispiel aus einem Eisenbahnwagen, dienendes System, bei dem die Container (36) in der Transportphase auf der Tragfläche (32) des Wagens (30) abgestützt sind, und das System
- Mittel zum Kippen des Containers (36) in der Entladephase zwecks Ausschüttens des Materials über eine zum Container (36) gehörende Seitenluke (37), und
- Verriegelungsmittel (18) zum Festhalten des Containers (36) am Kipprahmen (24) während des Kippens desselben umfasst, wobei die besagten Mittel zum Kippen des Containers (36) zum Bewegen mit einer Arbeitsmaschine (34) eingerichtet sind, **dadurch gekennzeichnet, dass** die besagten Mittel zum Unterschieben unter den Container (36) eingerichtet sind und die besagten Mittel weiter einen an der Tragfläche (32) des Wagens (30) abgestützten Rahmen (14) und den daran angelenkten besagten Kipprahmen (24) zum Tragen des Containers (36) umfassen.

2. System nach Anspruch 1, **dadurch gekennzeichnet, dass** zu den besagten Mitteln zum Kippen des Containers (36) eine Hubvorrichtung gehört, die zwischen dem besagten Kipprahmen (24) und dem besagten Rahmen (14) einen Zwischenarm (25) zum Verlagern des Kipprahmens (24) nach außen umfasst.

## Revendications

1. Système pour décharger des conteneurs séparés basculants (36) d'un wagon (30), par exemple un wagon ferroviaire, dans lequel système les conteneurs (36) s'appuient contre la surface de soutien (32) du wagon (30) pendant le stade de transport, et le système comprend
- des moyens pour basculer le conteneur (36) pendant le stade de déchargement pour vider le contenu par une trappe latérale (37) faisant partie du conteneur (36), et
- des moyens de verrouillage (18) pour maintenir le conteneur (36) attaché à un cadre basculant (24) pendant qu'il est basculé,
où lesdits moyens pour basculer le conteneur (36) sont disposés de sorte à pouvoir être déplacés à l'aide d'une machine (34), **caractérisé en ce que** lesdits moyens sont disposés de sorte à pouvoir être poussés sous le conteneur (36), et lesdits moyens comprennent également un cadre (14) qui s'appuie contre la surface de soutien (32) du wagon (30) et ledit cadre basculant (24) attaché à ce dernier par pivot pour porter le conteneur (36).

2. Système selon la revendication 1, **caractérisé en ce que** lesdits moyens pour basculer le conteneur (36) comprennent un appareil de levage, ayant un bras intermédiaire (25) entre ledit cadre basculant (24) et ledit cadre (14) pour déplacer le cadre basculant (24) vers l'extérieur.
